# EUROPEAN PATENT SPECIFICATION

(11) **EP 1 752 048 B1**
(45) Date of publication and mention of the grant of the patent: **29.05.2013**
(21) Application number: 06122832.6
(22) Date of filing: 07.07.2003
(51) Int. Cl.: A23G 4/00, A23G 4/20

(54) **A chewing gum tablet comprising at least two integral parts**
Kaugummmitablette mit mindestens zwei Körpern
Comprimé chewing gum comprenant au moins deux parties intégrales

(30) Priority: 15.07.2002 GB 0216413
(43) Date of publication of application: 14.02.2007
(62) Divisional of application: 03763734.5
(73) Proprietor: Bagger-Soerensen & Co. A/S, 7100 Vejle (DK)
(72) Inventor: Leadbeater, John Michael, Strensall, York Y032 5AZ (GB); Heald, Victor, Driffield, York Y025 9RS (GB); Cooper, Nicholas Alan, Dorchester, Dorset DT1 2ER (GB)
(74) Representative: Indahl, Peter Jensen

(56) References cited:
- EP-A- 1 449 525
- EP-A2- 0 267 160
- WO-A-01/93694
- WO-A-86/03967
- DE-A1- 2 808 160
- GB-A- 1 484 832
- US-A- 4 370 350

## Description

The present invention relates to a chewing gum tablet comprising at least two integral parts.

Ordinary chewing gum contains a generally neutral and essentially tasteless insoluble masticatory gum base which is usually a plasticised rubber or polymer which is softened and has added texturisers, anti-tacking agents and antioxidants, etc. The base is to be chewed rather than eaten in itself and is a vehicle for one or more non-masticatory active ingredients such as flavours and sweeteners.

WO 01/93694 describes an encapsulated product in the form of pressed caplets or capsules of relatively small size. The capsules can be incorporated into a chewing gum product.

GB 1 484 832 describes a multi-layered tablet where a layer of pure chewing gum is positioned on a layer of pressed non-plastic tablet mass or between such layers. The layer of pure chewing gum serves a sealing layer and enables two incompatible pharmaceutical compositions to be accommodated in one and the same tablet. The layer of chewing gum can be provided as granulated gum compressed to a disk of plastic mass, or as a disk cut out of a strip of plastic mass by a punch.

EP-A-0 253-040 discloses a chewing gum hard candy confection which softens in the mouth to a chewable mass upon mastication prepared by mixing a melted gum base with a cooked hard candy syrup and cooling to a hard candy matrix. Hard candy is usually made from a base of a bulk sweetener such as sugar and glucose syrup which normally contain about 95-98% of the product. The hard candy syrup comprising sugar, glucose syrup and water is cooked to a temperature of 127° to 185°C before adding the melted chewing gum base.

EP-A-1 517 616, published on 15 January 2004, viz. after the filing date of the present application, describes a compressed chewing gum tablet having a gum centre of compressed gum base granules and additives, and the gum base centre is encapsulated by a barrier layer.

Tablets can be hard and somewhat brittle with a smooth surface and differ from hard candy in that they are formed by compressing a tablet base powder in a die where the particles bond together under pressure and the compacted tablet is ejected from the die. A well-known tablet base material is a sugar or a polyol, e.g. sucrose, fructose, dextrose, sorbitol, mannitol, maltitol or xylitol. Tablets may be chewed in a crumbly state and eventually swallowed.

The present invention relates to a tabletted chewing gum sweet comprising at least two integral parts, which tablet has a novel effect in the mouth by giving an initial crunch followed by a normal chewing gum stage.

Accordingly, the chewing gum tablet according to the present invention comprises at least two integral parts of which a first integral part comprises a compressed mixture of particulated gum base material and particulated tablet base material, and a second integral part comprises compressed particulated tablet base material, said at least two integral parts being arranged as two or more layers on top of one another, and wherein the second layer has been compressed into a hard crunchy layer.

The chewing gum tablet may comprise one or more further integral parts which may be made of the same material as the first and second integral parts or of a different material to the first and second integral parts. The further integral parts may be arranged in a variety of configurations, e.g. as one integral part inlaid in another integral part, or one integral part completely enclosed within one or more other integral parts. The embodiment where one integral part is completely enclosed within one or more other integral parts is advantageous where the enclosed integral part is moisture sensitive.

In an embodiment of the invention the individual layers may be of the same or different thicknesses. In a tablet consisting of two layers, either layer may be thicker than the other, e.g. the ratio of thicknesses may be from 0.1:1 to 10:1, but preferably the first integral part of the tablet according to the invention is thicker than the second integral part, e.g. the ratio of thicknesses may be from 1.5:1 to 10:1 and preferably from 2:1 to 5:1.

The gum base may be any gum base well known to those skilled in the art and may be a plasticised rubber or polymer which may have added texturisers, anti-tacking agents and antioxidants. A particularly advantageous gum base is ARTICA-T made by Cafosa Gum S/A of Barcelona, Spain. Artica-T is composed of the following classes of materials: specially purified elastomeric polymers, resins, refined waxes, glycerol esters of edible fatty acids, talc, antioxidant.

The tablet base material used for both the first and second integral parts of the tabletted chewing gum sweet may contain sugar or be sugar-free and is preferably based on a sugar or a polyol, for example, sucrose, fructose, lactose, dextrose, sorbitol, mannitol, maltitol, xylitol, isomalt, glucose syrup, maltitol syrup or erithrithol. The tablet base material for both the first and second integral parts may be in particulate form, preferably powder form.(e.g. direct compressible grade sorbitol).

Either or both of the integral parts of the tablet may contain a binder, a lubricant, a flavour or a colour. The binder for a sugar may be, for instance, a mixture of glucose syrup and starch gum, e.g. in an amount of from 1-3% by weight based oh the weight of the second integral part. Generally, a binder is unnecessary for sorbitol since sorbitol is directly compressible.

However, if desired, lycasin may be added to the sorbitol in the first integral part of a sugar-free product and glucose may be added to the first integral part of a sugar-containing product e.g. in an amount from 1-10% and preferably from 2.5 to 7.5% by weight based on the weight of the first integral part. The flavour may be, for instance, mint, spearmint, peach, pear, strawberry, raspberry, vanilla, etc. Preferably, the first and second integral parts have different colours which may provide interesting contrasting effects to give a very distinctive and attractive visual indication of two components.

The first integral part of the tablet according to the invention may be prepared by compressing a mixture of the gum base and the tablet base material.

The second integral part of the tablet according to the invention may be prepared by compressing the tablet base material.

The particle sizes of the gum base and the tablet base of both the first and second integral parts may range from 10 microns to 2 mm, but the average particle size may be from 20 to 160 microns, preferably from 30 to 120 microns and more preferably from 50 to 100 microns.

Preferably, in the first integral part of the tablet, the gum base is present in an amount of from 5% to 99%, preferably from 10% to 50% and more preferably from 20% to 30% by weight and the tablet base is present in an amount from 1% to 95%, preferably from 50% to 90% and more preferably from 70% to 80% by weight based on the weight of the first integral part of the product.

The weight ratio of the first and second integral parts when there are 2 layers may be from 1.5:1 to 10:1 and preferably from 2:1 to 5:1.

Optionally, the chewing gum tablet may contain an active ingredient.

The active ingredient may be a pharmaceutical, medicated, nutritive or functional ingredient, a dental vehicle such as casein glycomacro-peptide (CGMP) or a breath freshener. For instance, the active ingredient may be any vitamin, enzyme, amino-acid supplement, protein, gum, carbohydrate, phytochemical, dextrose, lecithin, other trace nutrient, brain-stimulating substance, energy provider, a mineral, mineral salt, botanical extract, antioxidant, prebiotic, probiotic bacteria, fatty acid, oat beta glucan or other functional fibre, creatine, carnitine, bicarbonate, citrate, vivazol, or any mixture thereof.

The amount of active ingredient present in the tablet may depend on requirements and the actual ingredient used. For instance, some active ingredients have high functional activity at very low doses such as vitamins and minerals (micronutrients), whereas others such as dextrose (macronutrients) are beneficial to the body in much higher amounts. Furthermore, plant extracts may only contain small amounts of active constituents within the bulk of the extract and may therefore need to be added in larger amounts to ensure sufficient effective quantities of the active parts. The amount of active ingredient may, for example, be from up to 0.00000001 to 15% by weight of the chewing gum-containing tablet depending upon the ingredient. The amount of most ingredients is usually less than 1% by weight, and preferably from 0.000001 to 0.5% by weight of the chewing gum-containing tablet. CGMP may be used in amounts up to 15%, preferably from 1 to 12% and more preferably from 2.5 to 10% by weight of the tabletted chewing gum sweet.

The mineral may be calcium, iron, selenium, zinc, magnesium, phosphorus, iodine, manganese, iron, boron or copper, molybdenum, potassium, chromium, vanadium or fluoride.

The phytochemical may be a polyphenol, procyanidin or a phenolic acid, catechin or epicatechin, isoflavone, terpene or other phytonutritive plant material.

The botanical extract may be selected from Guarana, Gingko Biloba, Kola nut, Goldenseal, Golo Kola, Schizandra, Elderberry, St. John's Wort, Valerian and Ephedra, beta-sitosterol, caffeine, cafestol, D-limonene, kabweol, nomilin, oltipraz, sulphoraphane, tangeretin, black tea, white tea, java tea, folic acid, garlic oil, fiber, green tea extract, lemon oil, mace, licorice, menthol, onion oil, orange oil, rosemary extract, milk thistle extract, Echinacea, Siberian ginseng or Panax ginseng, lemon balm, Kava Kava, matte, bilberry, soy, grapefruit, seaweed, hawthorn, lime blossom, sage, clove, basil, curcumin, taurine, wild oat herb, dandelion, gentian, aloe vera, hops, cinnamon, peppermint, grape, chamomile, fennel, marshmallow, ginger, slippery elm, cardamon, coriander, anise, thyme, rehmannia, eucalyptus, menthol, kava kava, schisandra, withania, cowslip, lycium, passion flower.

The antioxidant substance may be glutathione peroxidase, superoxide dismutase, catalase, co-enzyme Q10 or honey.

The prebiotic may contain fructose, galactose, mannose, soy or inulin.

The probiotic bacteria may be lactobacilli or bifidobacteria, lactococcus, streptococcus, leuconostoccus, pediococcus or enterococcus.

Preferably, the active ingredient is present in the second integral part of the tabletted chewing gum sweet.

When the tabletted chewing gum sweet contains an active ingredient, it may impart to the consumer benefits such as oral care, breath freshness, pharmaceutical or nutritive advantages.

The present invention also provides a process for the preparation of a tabletted chewing gum sweet according to the invention in a configuration of two layers which comprises forming a first integral part by mixing a particulated gum base material with a particulated tablet base material, forming a second integral part comprising a particulated tablet base material, feeding one of the integral parts into a tablet press and compressing, feeding the other integral part into the tablet press and compressing both integral parts in the tablet press to enable the materials of each integral part to bind together and form a tabletted chewing gum sweet having the two integral parts joined together, and finally ejecting the tabletted chewing gum sweet.

Conveniently, the first integral part is fed into the tablet press before the second integral part to give the tabletted chewing gum sweet.

If desired, one or more further integral parts which may be made of the same material as the first and second integral parts or of a different material to the first and second integral parts are fed into the tablet press and compressed to form a product with three or more layers.

The tablet press comprises a die and a punch and the basic principle of compression applies wherein the die is filled with powder and compressed by the punch being lowered under pressure and maintained on the powder for a period of time known as the dwell time to form the tablet after which the tablet is ejected.

Many shapes and sizes of tablet may be made by varying the shape of the die and punch, e.g. circular, briquette, pillow, etc.

The present invention also provides a process for the preparation of a tabletted chewing gum sweet according to the invention in a configuration of one integral part inlaid in another integral part which comprises feeding one of the integral parts into a tablet press and compressing into a shape having an indentation, feeding the other integral part into the indentation and compressing both integral parts in the tablet press to enable the materials of each integral part to bind together and form a tabletted chewing gum sweet having the two integral parts joined together, and finally ejecting the tabletted chewing gum sweet.

The indentation may be of any desired shape or size, e.g. it may be circular, oval, angular or square in cross-section. If desired, a further integral part may be fed into the tablet press and compressed to cover and enclose the compressed integral part in the indentation.

In the mouth, the tabletted chewing gum sweet may also give a textural contrast of an initial crunchy and then a chewy sensation. The initial crunchy sensation is obtained from the second layer which compacts to a hard crunchy layer on compression. The duration of the initial crunchy sensation may last from about 10 seconds to about 1 minute, and typically from about 25 to 50 seconds before it disappears completely. The duration of the initial crunchy sensation depends on the thickness of the second layer, thicker layers giving a longer crunchy sensation.

The following Examples further describe the invention by way of illustration only.

The gum base used in all the Examples is ARTICA-T made by Cafosa Gum S/A of Barcelona, Spain.

### Example 1

The following formulation is used to make a large circular two-layered tabletted chewing gum sweet with a hole in the middle. The following ingredients are mixed to make the integral part of the first layer

| | |
|---|---|
| Gum Base | 21.3% |
| Sorbitol | 1.6% |
| Magnesium stearate | 0.5% |
| Spearmint Flavour (powder + liquid) | 1.1% |
| Blue colour | 0.5% |

The gum base and the sorbitol are used in powder form having an average particle size of 40 microns. The flavour is a combination of powder and liquid.

The above first layer integral part is filled into the die of a tablet press comprising a suitably shaped die and punch and compressed by the punch being lowered under pressure which is maintained on the powder for a period of time known as the dwell time to bond the particles together and compact them to form the compressed first layer.

The integral part of the second layer of tablet base material having a weight of one quarter of the weight of the first layer is made of 93.5% by weight of sorbitol having an average particle size of 40 microns, 5% by weight of CGMP, 1.0% by weight of magnesium stearate and 0.5% by weight of spearmint flavour.

The second layer of tablet base material is filled into the die of a tablet press on top of the compressed first layer and then compressed by the punch being lowered again to bond the particles and compact them to form the compressed second layer joined together to the compressed first layer to form the tabletted chewing gum sweet after which the tabletted chewing gum sweet is ejected. The tabletted chewing gum sweet has contrasting colours of blue and white with a nice even line on the join between the two layers.

In the mouth, the tablet initially has a crunchy texture which lasts for about 40 seconds and then becomes a normal cohesive chewing gum.

### Example 2

245.95 parts of a Cafosa Gum/Sorbitol premix containing the ingredients in the same proportion as in Example 1 having an average particle size of 40 microns are mixed with the following ingredients to give the integral part of the first layer:

| | |
|---|---|
| Magnesium stearate (lubricant) | 1.25 parts |
| Mint Oil | 1.30 parts |
| Mint powder | 1.00 parts |
| Menthol Trusil | 0.5 parts |
| Green colour | 0.1 part |

The integral part of the second layer having a weight of one quarter of the weight of the first layer is made of powdered sugar having an average particle size of 40 microns containing 0.5% of magnesium stearate, 2.4% of a 50:50 mixture of 4% glucose syrup and starch gum, and having a red colour.

The above mixtures were compressed as in Example 1 to give a mint-flavoured tabletted chewing gum sweet having two layers with contrasting colours of blue and red.

In the mouth, the tablet initially has a crunchy texture which lasts for 40 seconds and then becomes a normal cohesive chewing gum.

## Claims

1. A chewing gum tablet comprising at least two integral parts of which a first integral part comprises a compressed mixture of particulated gum base material and particulated tablet base material, and a second integral part comprises compressed particulated tablet base material, said at least two integral parts being arranged as two or more layers on top of one another, and wherein the second layer has been compressed into a hard crunchy layer.

2. A chewing gum tablet according to claim 1 comprising one or more further integral parts which may be made of the same material as the first and second integral parts or of a different material to the first and second integral parts.

3. A chewing gum tablet according to claim 1 or 2, wherein one integral part is inlaid in another integral part, or one integral part is completely enclosed within one or more other integral parts.

4. A chewing gum tablet according to any of claims 1 to 3, wherein the individual layers are of the same or different thicknesses.

5. A chewing gum tablet according to any of claims 1 or 2, or 4 when depending on claim 1 or claim 2, and consisting of two layers wherein one of the layers is thicker than the other.

6. A chewing gum tablet according to claim 5 wherein the ratio of thicknesses is in the range from 0.1:1 to 10:1.

7. A chewing gum tablet according to claim 5 wherein the first integral part of the tablet is thicker than the second integral part in a ratio of from 1.5:1 to 10:1.

8. A chewing gum tablet according to any of claims 1 to 7, wherein the tablet base material for both the first and second integral parts is based on a sugar or a polyol.

9. A chewing gum tablet according to any of claims 1 to 8, wherein the gum base material is a plasticised rubber or polymer which has added texturisers, anti-tacking agents and antioxidants.

10. A chewing gum tablet according to any of claims 1 to 9, wherein the tablet base material for both the first and second integral parts is of sucrose, fructose, lactose, dextrose, sorbitol, mannitol, maltitol, xylitol, isomalt, glucose syrup, maltitol syrup or erithrithol.

11. A chewing gum tablet according to any of claims 1 to 10, wherein the particle sizes of the gum base and the tablet base materials of both the first and second integral parts are in the range from 10 microns to 2 mm.

12. A chewing gum tablet according to any of claims 1 to 11, wherein in the first integral part the gum base is present in an amount of from 5% to 99%.

13. A chewing gum tablet according to any of claims 1 to 12, wherein the weight ratio of the first and second integral parts is from 1.5:1 to 10:1.

14. A chewing gum tablet according to any of claims 1 to 13, wherein the tablet contains a binder, a lubricant, a flavour or a colour.

15. A chewing gum tablet according to any of claims 1 to 14, wherein the first and second integral parts have different colours which provide contrasting effects to give a very distinctive and attractive visual indication of two components.

16. A chewing gum tablet according to any of claims 1 to 15, which tablet gives a textural contrast when broken in the mouth of an initial crunchy and then a chewy sensation.

17. A chewing gum tablet according to any of claims 1 to 16 and containing an active ingredient.

18. A chewing gum tablet according to claim 17, wherein the active ingredient is present in the second layer.

19. A chewing gum tablet according to claim 18, wherein the active ingredient is a pharmaceutical, medicated, nutritive or functional ingredient, a dental vehicle or a breath freshener.

20. A chewing gum tablet according to any of claims 17 to 19, wherein the amount of active ingredient is from 0.000001 to 0.5% by weight of the tablet.

## Patentansprüche

1. Kaugummitablette, umfassend wenigstens zwei integrale Teile, wovon ein erster integraler Teil ein komprimiertes Gemisch von teilchenförmigem Gummigrundlagenmaterial und teilchenförmigem Tablettengrundlagenmaterial umfasst und ein zweiter integraler Teil komprimiertes teilchenförmiges Tablettengrundlagenmaterial umfasst, wobei die wenigstens zwei integralen Teile als zwei oder mehr Schichten aufeinander angeordnet sind und wobei die zweite Schicht zu einer harten, knusprigen Schicht komprimiert worden ist.

2. Kaugummitablette gemäß Anspruch 1, umfassend einen oder mehrere weitere integrale Teile, die aus dem gleichen Material wie der erste und der zweite integrale Teil oder aus einem anderen Material als der erste und der zweite integrale Teil hergestellt sein können.

3. Kaugummitablette gemäß Anspruch 1 oder 2, wobei ein integraler Teil in einen anderen integralen Teil eingelegt ist oder ein integraler Teil vollständig in einem oder mehreren anderen integralen Teilen eingeschlossen ist.

4. Kaugummitablette gemäß einem der Ansprüche 1 bis 3, wobei die einzelnen Schichten gleiche oder verschiedene Dicken aufweisen.

5. Kaugummitablette gemäß einem der Ansprüche 1 oder 2, oder 4 wenn abhängig von Anspruch 1 oder 2, bestehend aus zwei Schichten, wobei eine der Schichten dicker als die andere ist.

6. Kaugummitablette gemäß Anspruch 5, wobei das Verhältnis der Dicken im Bereich von 0,1:1 bis 10:1 liegt.

7. Kaugummitablette gemäß Anspruch 5, wobei der erste integrale Teil der Tablette in einem Verhältnis von 1,5:1 bis 10:1 dicker als der zweite integrale Teil ist.

8. Kaugummitablette gemäß einem der Ansprüche 1 bis 7, wobei das Tablettengrundlagenmaterial für sowohl den ersten als auch den zweiten integralen Teil auf einem Zucker oder einem Polyol basiert.

9. Kaugummitablette gemäß einem der Ansprüche 1 bis 8, wobei das Gummigrundlagenmaterial ein weichgemachter Gummi oder weichgemachtes Polymer ist, der/das zugegebene Texturierungsmittel, Antihaftmittel und Antioxidationsmittel aufweist.

10. Kaugummitablette gemäß einem der Ansprüche 1 bis 9, wobei das Tablettengrundlagenmaterial für sowohl den ersten als auch den zweiten integralen Teil aus Sucrose, Fructose, Lactose, Dextrose, Sorbitol, Mannitol, Maltitol, Xylitol, Isomalt, Glucosesirup, Maltitolsirup oder Erythritol besteht.

11. Kaugummitablette gemäß einem der Ansprüche 1 bis 10, wobei die Teilchengrößen der Gummigrundlage- und der Tablettengrundlagenmaterialien für sowohl den ersten als auch den zweiten integralen Teil im Bereich von 10 Mikrometer bis 2 mm liegen.

12. Kaugummitablette gemäß einem der Ansprüche 1 bis 11, wobei in dem ersten integralen Teil die Gummigrundlage in einer Menge von 5 % bis 99 % vorhanden ist.

13. Kaugummitablette gemäß einem der Ansprüche 1 bis 12, wobei das Gewichtsverhältnis des ersten und des zweiten integralen Teils von 1,5:1 bis 10:1 beträgt.

14. Kaugummitablette gemäß einem der Ansprüche 1 bis 13, wobei die Tablette ein Bindemittel, ein Gleitmittel, ein Geschmacksmittel oder ein Farbmittel enthält.

15. Kaugummitablette gemäß einem der Ansprüche 1 bis 14, wobei der erste und der zweite integrale Teil verschiedene Farben aufweisen, die kontrastierende Wirkungen liefern, um eine sehr charakteristische und anziehende visuelle Kennzeichnung von zwei Komponenten zu ergeben.

16. Kaugummitablette gemäß einem der Ansprüche 1 bis 15, welche Tablette beim Brechen im Mund einen Texturkontrast von einem anfangs knusprigen zu einem anschließend weichen ("chewy") Gefühl ergibt.

17. Kaugummitablette gemäß einem der Ansprüche 1 bis 16, die einen Wirkstoff enthält.

18. Kaugummitablette gemäß Anspruch 17, wobei der Wirkstoff in der zweiten Schicht vorhanden ist.

19. Kaugummitablette gemäß Anspruch 18, wobei der Wirkstoff ein pharmazeutischer, medizinischer, nutritiver oder funktioneller Inhaltsstoff, ein Dentalträger oder ein Atemerfrischer ist.

20. Kaugummitablette gemäß einem der Ansprüche 17 bis 19, wobei die Menge an Wirkstoff von 0,000001 bis 0,5 Gew.-% der Tablette beträgt.

## Revendications

1. Comprimé chewing gum comprenant au moins deux parties intégrées, une première partie intégrée comprenant un mélange comprimé de matériau de base de gomme sous forme de particules et de matériau de base de comprimé sous forme de particules, et une deuxième partie intégrée comprenant un matériau comprimé de base de comprimé sous forme de particules, lesdites au moins deux parties intégrées étant disposées sous forme de deux couches ou plus l'une sur l'autre ou les unes sur les autres, et la deuxième couche ayant été comprimée pour produire une couche dure croquante.

2. Comprimé chewing gum selon la revendication 1, comprenant une ou plusieurs parties intégrées supplémentaires qui peuvent se composer du même matériau que les première et deuxième parties intégrées ou se composer d'un matériau différent de celui des première et deuxième parties intégrées.

3. Comprimé chewing gum selon la revendication 1 ou 2, dans lequel une partie intégrée est incrustée dans une autre partie intégrée, ou une partie intégrée est complètement enfermée dans une ou plusieurs autres parties intégrées.

4. Comprimé chewing gum selon l'une quelconque des revendications 1 à 3, dans lequel les couches individuelles ont la même épaisseur ou différentes épaisseurs.

5. Comprimé chewing gum selon l'une quelconque des revendications 1 ou 2, ou selon la revendication 4 quand ledit comprimé chewing gum est selon la revendication 1 ou la revendication 2, et constitué de deux couches, une des couches étant plus épaisse que l'autre.

6. Comprimé chewing gum selon la revendication 5, dans lequel le rapport des épaisseurs est de 0,1:1 à 10:1.

7. Comprimé chewing gum selon la revendication 5, dans lequel la première partie intégrée du comprimé est plus épaisse que la deuxième partie intégrée selon un rapport de 1,5:1 à 10:1.

8. Comprimé chewing gum selon l'une quelconque des revendications 1 à 7, dans lequel le matériau de base de comprimé pour la première partie intégrée ainsi que pour la deuxième partie intégrée est à base d'un sucre ou d'un polyol.

9. Comprimé chewing gum selon l'une quelconque des revendications 1 à 8, dans lequel le matériau de base de gomme est un caoutchouc plastifié ou un polymère additionné d'agents de texture, d'anti-collants et d'antioxydants.

10. Comprimé chewing gum selon l'une quelconque des revendications 1 à 9, dans lequel le matériau de base de comprimé pour la première partie intégrée ainsi que pour la deuxième partie intégrée est constitué de saccharose, de fructose, de lactose, de dextrose, de sorbitol, de mannitol, de maltitol, de xylitol, d'isomalt, de sirop de glucose, de sirop de maltitol ou d'érythritol.

11. Comprimé chewing gum selon l'une quelconque des revendications 1 à 10, dans lequel les tailles de particules des matériaux de base de gomme et de base de comprimé de la première partie intégrée ainsi que de la deuxième partie intégrée sont de 10 microns à 2 mm.

12. Comprimé chewing gum selon l'une quelconque des revendications 1 à 11, dans lequel, dans la première partie intégrée, la base de gomme est présente dans une quantité de 5 % à 99 %.

13. Comprimé chewing gum selon l'une quelconque des revendications 1 à 12, dans lequel le rapport pondéral de la première partie intégrée contre la deuxième partie intégrée est de 1,5:1 à 10:1.

14. Comprimé chewing gum selon l'une quelconque des revendications 1 à 13, le comprimé contenant un liant, un lubrifiant, un arôme ou un colorant.

15. Comprimé chewing gum selon l'une quelconque des revendications 1 à 14, dans lequel la première partie intégrée et la deuxième partie intégrée ont différentes couleurs qui produisent des effets contrastés pour indiquer visuellement, de manière très distinctive et attrayante, la présence de deux éléments.

16. Comprimé chewing gum selon l'une quelconque des revendications 1 à 15, lequel comprimé, quand il est écrasé dans la bouche, produit un contraste de textures, avec une sensation initiale croquante suivie d'une sensation moelleuse.

17. Comprimé chewing gum selon l'une quelconque des revendications 1 à 16 et contenant un principe actif.

18. Comprimé chewing gum selon la revendication 17, dans lequel le principe actif est présent dans la deuxième couche.

19. Comprimé chewing gum selon la revendication 18, dans lequel le principe actif est un ingrédient pharmaceutique, médicamenteux, nutritif ou fonctionnel, un véhicule dentaire ou un rafraîchisseur d'haleine.

20. Comprimé chewing gum selon l'une quelconque des revendications 17 à 19, dans lequel la quantité de principe actif est de 0,000001 à 0,5 % en poids du comprimé.
